# EUROPEAN PATENT APPLICATION

(11) **EP 1 673 975 A1**
(43) Date of publication of application: **28.06.2006**
(21) Application number: 04078536.2
(22) Date of filing: 27.12.2004
(51) Int. Cl.: A23C 9/142, B01D 61/14

(54) **Shear induced fractionation of particles**

(71) Applicant: Friesland Brands B.V., 8937 AC Leeuwarden (NL)
(72) Inventor: Kromkamp, Jantje, 6711 BE Ede (NL); van der Padt, Albert, 7321 EA Appeldoorn (NL); Schroen, Catharina Gerarda Petronella Henrica, 6708 DK Wageningen (NL); Boom, Remko Marcel, 6712 CG Wageningen (NL)
(74) Representative: Winckels, Johannes Hubertus F.

(57) **Abstract**

The present invention relates to a method for size-fractionating particles, comprising subjecting a fluid containing the particles to shearing, thereby inducing particle size segregation, and dividing the fluid in at least one fraction enriched in particles with a relatively high size and at least one fraction enriched in particles with a relatively low size. The invention further relates to an apparatus for carrying out a method according to the invention.

## Description

The invention relates to a method for separating particles, based upon their size in a fluid.

In various applications, a desire exists for products comprising selected fractions of particles, enriched in particles with a size in a specific range. For example, there is a desire for dairy products comprising a selected fraction of fat globules and for dairy products which are (partially) defatted.

US 6 551 648 B1 relates to a process for selectively separating according to their size the fat globules present in a food or biological medium. The process comprises subjecting the medium to at least a tangential microfiltration, on a membrane with a cut-off threshold between 1.8-10 µm. Typically the flow conditions are turbulent, and the TMP conditions are uniform. The method is used to separate particles having a diameter above the threshold (max. 10 µm) from particles below the threshold. The presence of particles having about the same size as the membrane-pores makes this process susceptible to contamination and fouling of the membrane and blocking of the pores, especially under the highly turbulent flow conditions in combination with the high flux existing in the embodiments disclosed in

### US 6 551 648 B1.

It is an object of the present invention to provide a novel method for treating a fluid, said fluid comprising particles, thereby separating particles based upon their size.

It is further an object of the invention to provide a method for treating a fluid, said fluid comprising particles, whereby the fluid is divided into a fraction enriched in particles and a fraction comprising a reduced concentration of particles.

It is further an object of the invention to provide a method for treating a fluid, said fluid comprising particles, which is robust, also when treating a fluid with a high concentration of particles. In particular it is an object to provide a method which is not or hardly susceptible to deterioration due to filter (membrane) fouling, wall fouling and/or blocking.

An additional object is to provide a method for treating a fluid comprising particles which method is suitable for use on an industrial scale, in particular by providing a process which may be operated under mild temperature and/or pressure conditions, which requires the use of a relatively small amount of energy, and/or wherein the intervals between subsequent maintenance sessions may be increased.

It is further an object of the invention to provide a novel apparatus for carrying out a method for separating particles in a fluid.

It has now been found that one or more of the objects expressed herein may be solved by subjecting a fluid, comprising particles, to specific flow conditions and thereafter dividing the fluid in at least two fractions, wherein the size distribution of the particles in said fractions differ from each other.

In particular, it has been found that particles can be separated based upon their size and/or be concentrated by subjecting a fluid, in which the particles are present, to shearing.

Accordingly, the present invention relates to a method for treating a fluid comprising particles, in particular a method for fractionating particles based upon size, comprising subjecting a fluid containing the particles to shearing (thereby inducing particle size segregation) and dividing the fluid in at least one fraction enriched in particles with a relatively large size and at least one fraction enriched in particles with a relatively small size.

The invention allows a size segregation of particles in the fluid, which may be used to obtain fractions enriched in particles in a specific size range. In addition or instead, the invention allows to obtain a fraction concentrated in particles and/or a fraction with a reduced concentration of particles, the latter possibly even being a fraction which is essentially free of the particles.

Accordingly, the present invention further relates to a method for treating a fluid comprising particles, in particular a method for concentrating particles and/or removing particles from a fluid, comprising subjecting a fluid containing the particles to shearing (thereby inducing particle size segregation) and dividing the fluid in at least one fraction enriched in particles, compared to the fluid prior to shearing and at least one fraction wherein the concentration of particles is decreased compared to the fluid prior to shearing.

It is contemplated that also when concentrating particles, the particles are size segregated (perpendicular to the plane of shear), to an extent wherein the concentration of particles in the part of fluid flowing close to the wall (where shear rate is highest) becomes lower than in the part of the fluid farther from the wall (where shear rate is lower). If desired, the fluid may then be divided in a first fraction enriched in particles and a second fraction with a reduced particle concentration. It is also possible to divide said first fraction (and/or said second fraction) into several fractions, wherein different fractions contain particles in a different size distribution.

Figure 1A schematically shows the segregation in accordance with the invention, wherein under shearing conditions (here using a fully laminar flow) small particles are segregated from large particles in the direction essentially perpendicular to the flow direction.

Figure 1B schematically shows the flux (J) versus the trans filter (membrane) pressure (TMP) in an embodiment of the invention wherein use is made of a tangential filtration device.

Figure 2 schematically shows an experimental set-up of an apparatus according to the invention, comprising a filter device, such as a membrane, to divide the smaller particles from the larger particles. (The gaps in the dotted line representing the filter (membrane) do not represent the pore size.)

Figures 3-5 schematically show embodiments of a separation device which may be used in accordance with the invention, wherein a flow-splitter is present for dividing fractions.

Figure 6 shows a tangential filtration membrane, known in the art, which is suitable for use in accordance with the invention.

Figure 7 shows the flux vs. TMP in a method of the invention.

Figure 8 shows a plot of relative particle content and median particle diameter as a function of flux at several flow rates in a method of the invention.

Due to the possibility to separate particles based upon their size and/or concentrate particles in a fluid without needing a sieving means (such as a membrane, another type of filter or sieve) having a cut off with a diameter of about the desired minimum particle size for the large particles or the desired maximum particle size for the small particles, fouling and/or blocking of the membrane/filter/sieve can be reduced or even completely avoided. In fact even in case such a filter is used, fouling and/or blocking has been found to be avoidable, due to the fact that the larger particles migrate remote from the channel wall, and thus remote from the membrane/sieve.

A method according to the invention is very suitably carried out as a continuous process.

Further, in an embodiment the invention allows the efficient separation of particles from complex fluids, such as suspensions with high concentrations of particles, without needing to dilute the fluid. Also in an embodiment of the invention wherein the fluid contains a high concentration of particles, a low risk of fouling/blocking may be maintained. Moreover, a high selectivity is maintained, also at a high concentration of particles.

Moreover, the selectivity of the fractionation can easily be altered within wide boundaries by modifying process conditions (such as shear rate), without needing to change the fractionation apparatus (such as changing the membrane for a membrane with a different cut-off threshold). This allows the use of one system for more types of fractionations and/or facilitates fractionation optimization.

When the terms "about", "essentially consisting of", "substantially", "essentially" and the like are used herein, this is at least meant to include a deviation of up to 20 %, in particular of up to 5 %, more in particular of up to 2%.

The term "essentially free" is used to describe that no traceable amount (as detectable by conventional means at the filing date) or only a minor amount of a particular component is present in the composition. In particular this term is used to indicate an amount of less than 0.5 wt. %, more in particular an amount of less than 0.1 wt. % of the component of which the composition is essentially free.

The term "fat" as used herein includes both fats that are liquid at room temperatures (oils) and fats that are solid at room temperature (solid fats), unless specified otherwise.

As the separation of the particles (from each other and/or from the fluid) is achieved without requiring a device functioning as a filter (such as a membrane or sieve having a cut-off threshold equal to about the particles size of the relatively large particles) and the relatively large particles tend to migrate remote from the channel wall (in which a membrane/sieve may be present), filter aids in the form of relatively coarse particles may be used, if desired. It is envisaged that such an aid may be used without substantial detrimental effects related to blocking of such filter by such particles, as would be the case in a known process. Examples of filter aids include perlite, diatomite, cellulose, bleaching earth, dessicants, activated carbon, fullers earth, activated alumina, acid activated clay, anthracite, potassium permanganate, sand, gravel and garnet.

The filter aid particles may be smaller than the cut-off threshold of the sieve/membrane which may be used to divide the small particles from the large particles. In principle, filter aids having a particle size equal to or larger than the cut-off threshold may also be employed. As in accordance with the invention, large particles tend to migrate to a central section of the channel (remote from the wall), fouling/blocking may usually be essentially avoided or at least be at an acceptably low level, also when such particles are employed.

As used herein, the particles to be separated (and/or concentrated) in accordance with the invention may be any material that is not molecularly dissolved in the fluid. The particles may be fluid or solid (*i*.*e*. non-fluid). Thus, the particles may be any material suspended in a fluid, including any suspension of a liquid wherein another fluid is suspended (such as an emulsion of liquid particles) and/or a wherein a solid material is suspended (in particular dispersed).

The particles may be substantially uniform in composition, for example emulsified droplets of a hydrophobic substance - such as molten fat or a liquid oil - in an aqueous or other polar medium, a solid fatty substance dispersed in a fluid, a solid polymer or a solid mineral in a liquid. Alternatively the particles may be heterogeneous, e.g. having a core and a shell, wherein the core and shell may be in the same or different physical phase, e.g wherein the core may comprise a fluid and/or a gas and wherein the shell may be solid or wherein both core and shell are solid.

In an embodiment, the particles are at least partially solid at room temperature (20 °C), although they may be fractionated (and/or concentrated) while they are more or less in a liquid form (as suspended particles in the fluid, in particular as an emulsion) at a temperature above the melting temperature or (in case the particles consist of different components having different melting temperatures) above or within the melting range of the particles. For example, fat globules may be fractionated (and/or concentrated) at a temperature above, below or at their melting temperature/melting range.

At least the larger particles to be separated usually have a diameter (as determined by LASER diffraction, such as with a Malvern Master Sizer or another Malvern LASER diffractometer) of at least 0.01 µm, preferably of at least 0.05 µm.

The upper limit is not particularly critical. In principle, the method may be employed for separating macroscopic particles, such as particles having a particles size of up to 1 mm, or more. In practice, good results have been achieved with separating particles having a diameter of up to about 100 µm, preferably up to about 30 µm.

Good results have been achieved with a method wherein at least about 95 vol. % of the particles, in particular at least 97.5 % of the particles, have a diameter of up to about 10 µm, in particular of about 1-10 µm. Preferably, at least 50 vol. %, in particular at least about 65 vol % of the particles have a diameter of less than 5 µm.

Preferred examples of particles to be separated (by size-fractionation from each other and/or from the fluid) are particles selected from the group consisting of emulsion droplets; fat globules, in particular milk fat globules; micelles, in particular micelles comprising a milk protein, more in particular a casein; (coated) gas bubbles; liposomes; microspheres; microcapsules; lipoplexes; lipid complexes; lipospheres; cochleates; nanospheres; nanocapsules; protein particles; starch particles; polymer particles; micro-organisms; crystals, in particular lactose crystals, and the like. The different particles may be of the same type (same/similar material; all being micro-organisms) or of a different type. In a preferred embodiment the particles to be separated are fat globules.

The particle size distribution of the fluid to be used in the method may be monomodal or polymodal (such as bimodal).

The fluid may be any fluid comprising particles, such as a liquid with solid particles or a liquid with liquid particles. It may be a suspension, in particular an emulsion or a dispersion. The liquid phase may comprise an inorganic solvent, an organic solvent and mixtures thereof. Good results have been achieved with an aqueous liquid phase.

Preferred fluids include fluids containing milk proteins and milk fat, in particular milk; suspensions comprising protein and/or starch; and fermentation fluids. Particularly good results have been achieved with a method wherein fat globules are separated from milk or another fluid containing fat globules.

The separation mechanism underlying the invention is based upon the insight that when particles in a fluid are subjected to shearing, they can be segregated based upon their size.

It is also envisaged within the present invention to carry out the segregation to an extent wherein in part of the fluid (usually very close to the wall of a channel wherein the method is carried out) the particles concentration is reduced, possibly to an extent wherein that part of the fluid is essentially free of particles. So in the broadest sense, size segregation may include segregation into a fraction with particles and a fraction essentially free of particles, in particular free of particles with a diameter exceeding one of the above identified usual respectively preferred minimum particle diameters.

In order to induce particle size distribution by shearing, it is generally sufficient that the conditions are chosen such that the fluid is subjected to laminar flow in at least part of the fluid for some time; for optimising the size segregation parameters such as shear rate, duration of shearing/shear rate etc. can be adjusted. These aspects will be discussed in more detail below. In the centre of the channel, the flow conditions may be more or less turbulent.

The shearing causes a shear rate gradient to be formed over the fluid.

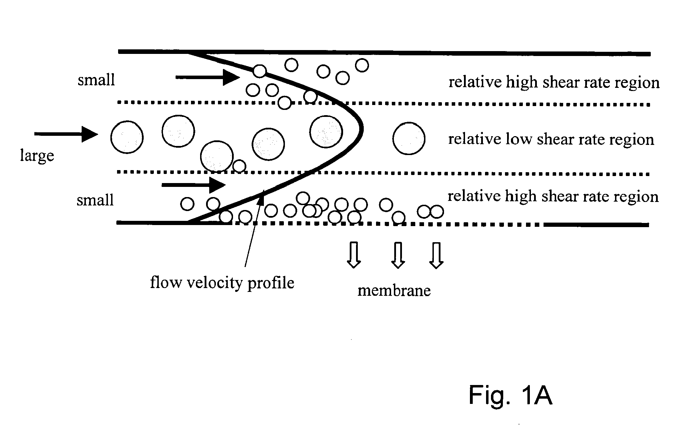

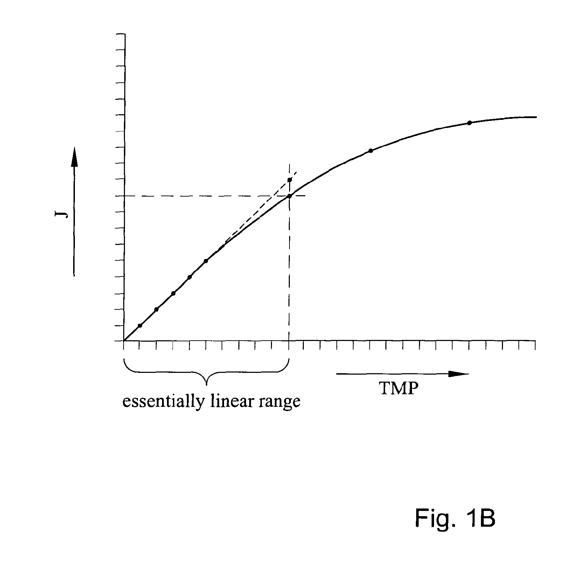

It has been found that relatively large particles will migrate to a region in the fluid where the shear rate is relatively low, whereas relatively small particles will migrate to a region where the shear rate is relatively high. This is schematically shown in Figure 1. Subsequently the size segregated fluid is divided by taking a fraction from a region enriched in relatively large particles and/or a fraction from a region enriched in relatively small particles.

The shearing may be effected in any way. A convenient way is passing the fluid through a channel, in particular a tube, under shearing conditions. The channel may be cylindrical or conical. The channel may have a circular, oval or polygonal (e.g. tetragonal, such as rectangular) cross-section.

The use of a channel with an essentially circular cross-section is advantageous, because of a highly uniform shear rate at the wall. This is considered to contribute to a highly effective size segregation, whereby the fluid near the channel wall becomes highly enriched in the small particles, during the process.

A channel that is at least partially conical may be used to control the shear rate in the longitudinal direction. In particular when a filter, such as a membrane, is used the conical design (narrowing in the down stream direction) may be used to compensate for a loss of fluid, as a consequence of the division by the filter.

Shearing conditions are usually realised by choosing the separation system and passing conditions such that at least in part of the fluid (typically near a (channel) wall) the movement of the liquid is substantially laminar.

Separation efficiency can be estimated based upon the shear- based Reynolds numbers (Re) of the particles to be separated. Re is defined as ρ.γ.a²/µ; wherein ρ is the density of the fluid, γ is the shear rate, a the radius of the particles to be separated and µ the dynamic viscosity of the fluid. The larger the difference in Re between the relatively large and relatively small particles, the shorter the channel length needs to be to achieve a particular separation efficiency.

A desirable value for Re depends upon the desired average/maximum diameter of the smaller particles and the desired average/minimum diameter of the larger particles. As a rule of thumb, as Re decreases, the average/minimum diameter in the fraction with the larger particles increases and the average/maximum diameter in the fraction with the smaller particles decreases. A desirable Re can be chosen based upon the information disclosed herein, the desired particle size distribution in either of the fractions and routine experimentation.

Re may be adjusted to the desired value by adjusting the viscosity of the fluid, e.g. by changing temperature and/or adding a viscosity modifier); by adjusting the density (p) of the fluid, e.g. by diluting the fluid ; and/or by adjusting the shear rate, e.g. by altering the pressure drop, adjusting the geometry and dimensions of the channel).

For maintaining laminar flow conditions, at least in a part of the fluid, Reynolds number of the fluid (Re') in the separation layer (wherein Re'= ρ.v.d/η; "v"represents the flow velocity, "d" represents the thickness of the separation layer, η is the kinematic viscosity) preferably is about 2000 or less.

Laminar flow conditions (at least near the wall, in the laminar boundary layer) not only allow an effective shear induced separation but also allow operating under relatively simple conditions, with a relatively low energy consumption and a relatively low pressure drop over the channel.

In an embodiment, the method according to the invention involves:
- passing the fluid containing the particles through a channel under shearing-conditions;
- allowing the particles to become size-segregated in the direction essentially perpendicular to the direction of passing through the channel;
- and dividing the fluid by taking at least one fraction from a part of the size-segregated fluid, the fraction being taken in the direction essentially perpendicular to the fluid's passing direction.

The dividing may be chosen such that two or more fractions are obtained, comprising particles wherein the size distribution of the particles is different for different fractions; alternatively or in addition, the dividing may be chosen such that at least one fraction is obtained with a reduced concentration of particles.

The pressure drop over the channel (ΔP) is generally chosen such that the shear rate ( *e.g.* expressed by shear velocity or Re) is such that a desired particle size distribution in the direction perpendicular to the flow direction is achieved.

Based upon the information disclosed herein and general knowledge a suitable channel length, diameter and flow through capacity Q (Q=v.A; v= average flow velocity through the channel; A = flow through area divided by channel area) can empirically be determined, depending upon the desired selectivity and resolution. In particular for separating fat globules from an aqueous fluid such as milk, a channel length of about 1 m or more has been found effective. A longer or shorter channel may be employed, though.

In particular for separation of milk fat globules (from each other and/or from the fluid), or particles having a comparable size (in general nano particles of microparticles), a channel diameter in the range of about 1 µm up to about 10 cm is considered particularly suitable, with the proviso that the channel diameter is larger than the largest particles. For generally larger particles it is envisaged that channel diameters of at least about 1 cm are particularly suitable. For generally smaller particles, diameters of less than 1 mm may be particularly suitable, with the proviso that the channel diameter is larger than the largest particles.

Further, in an embodiment of the invention at least a part of a fraction separated in the process to the fluid feed is fed back to the fluid to be fractionated. This contributes to good process optimization possibilities. For instance, in case it is desired to obtain a fraction enriched in the relatively small particles as a product of interest, the fraction enriched in relatively large particles may be fully or partially refluxed, and vice versa.

Good results have been achieved with a method wherein use is made of a tangential filtration device, for dividing fractions. Such a device may be similar to the device described in US 6 551 648B1, with the proviso that system conditions (e.g. membrane/sieve cut off threshold) and/or operating conditions (to realise the flow under shearing conditions) are adapted to achieve shearing conditions. In particular, in a method according to the present invention the conditions are such that the flux through the membrane/sieve is usually chosen to be lower. In general, when a fluid is passed through a tangential filter membrane, the flux (J) versus transfilter (membrane) pressure drop (TMP) shows an essentially linear relationship, at relatively low flux. TMP increases directly proportionally with J (d(TMP)/dX= constant, larger than 0). At a relatively high flux, the TMP increases degressively as a function of J (d²(TMP)/dJ² <0). J versus TMP is schematically shown in Figure 1B.

It is has been found that particularly suitable shearing conditions in an embodiment wherein a tangentional flow filtration device is used are achieved at a flux and TMP in the essentially linear range.

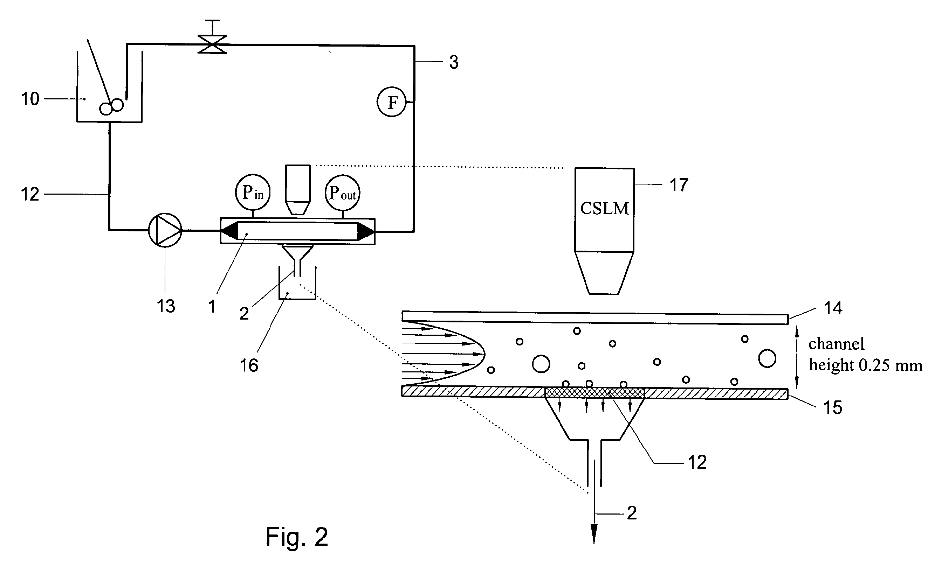

An example of a separation system making use of a tangential filtration device is schematically shown in Figure 2. The right half shows the general set-up. The fluid comprising the particles, e.g. fat globules, is pumped with pump 13 from a fluid container 10 to (main) channel 1, via conduit 12. The channel 1 is here formed of an upper plate 14 and a lower plate 15. The lower plate 15 is provided with a filtration membrane 12 for dividing the fluid. The fraction with the smaller particles may be collected in a container via conduit 2; the fraction with the larger particles exits the channel 1 to conduit 3, of which the inlet is located essentially equidistant from the lower plate and the upper plate. The larger fraction may be fed back to the container 10 (as shown in Figure 2) or be collected in a separate container (not shown). In particular for scientific purposes or for method development, the upper plate may be transparent and a microscope 17 may be positioned above the membrane, to study the particles behaviour.

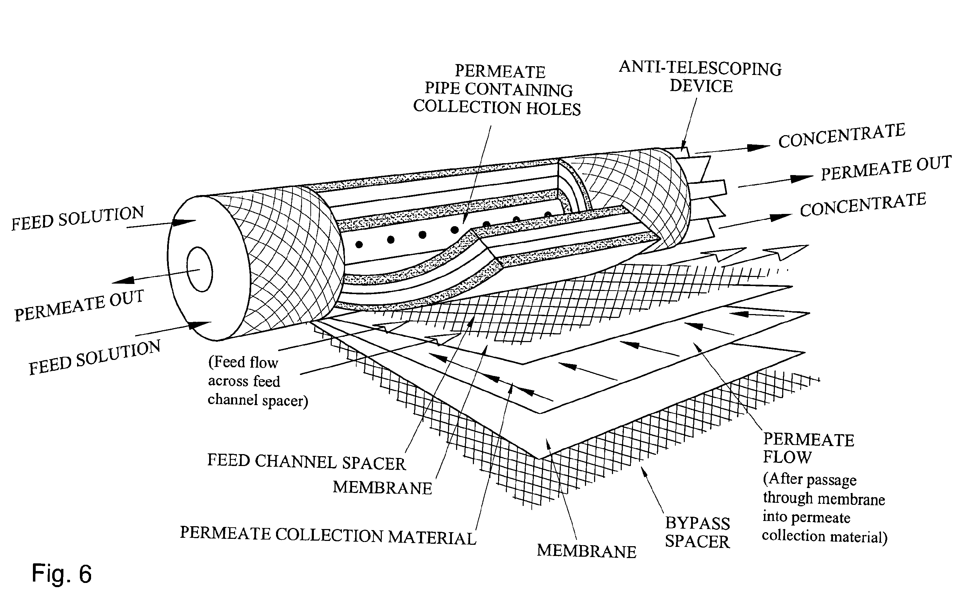

Figure 6 shows a membrane based multi-channel system with a spiral wound filter module comprising spacers. Suitable filter modules are commercially available, e.g from DSS (Denmark), Koch or Millipore.

Commercially available modules comprise so called turbulent spacers, *i*.*e*. spacers that facilitate turbulent flow behaviour, generally preferred when using the modules in a conventional manner. However, it is possible to use such modules in accordance with the invention, by choosing the conditions such that sufficient shearing is maintained, which is achieved as indicated above by controlling TMP and J.

In a preferred embodiment use is made of a spiral wound filter module comprising laminar spacers. Such a filter may be manufactured in essentially the same way as commercially available filters. Instead of turbulent spacers, laminar spacers are incorporated. Such spacers may be positioned substantially parallel of each other, to facilitate laminar flow, when in use.

As particles of a different size are already size segregated (in the direction substantially perpendicular to the general flow direction) the pore size respectively mesh size of the membrane/sieve may be (much) larger than both the larger particles and the smaller particles which are to be separated in different fractions (although in principle the pores/meshes of the membrane/sieve may be smaller than the larger particles). Thus, the fouling and/or blocking of the membrane/sieve, usually mainly caused by particles having a size close to or larger than the pores/mesh of the membrane/sieve, is reduced. Thus, a high selectivity is maintained for a prolonged period of time and the method may be operated continuously longer without needing maintenance. Further, the reduced blocking allows the use of fluids with a relatively high content of particles, without needing to dilute the fluid.

In an embodiment wherein use is made of a filter/membrane/sieve the cut-off threshold of the filter/membrane/sieve is preferably at least 2 times, more preferably at least 5 times, the number average particle diameter of the particles in the permeate (the fraction with the relatively small particles). In such an embodiment, fouling/blocking tends to be particularly low or may even be avoided.

The upper limit is not particularly critical. For practical reasons, a filter/membrane/sieve with a cut-off threshold of up to about 10 times the number average particle size of the particles in the permeate may be used.

In a preferred embodiment, the cut-off threshold of the membrane is also larger than the number average particles diameter of the relatively large particles, more preferably at least 2 times the number average particle diameter of the relatively large particles.

A preferred cut-off threshold for the filter/membrane/sieve depends on the desired particle size distribution in the fractions. In particular for a fluid wherein the particles to be separated predominantly have a size in a range such as fat globules in milk (predominantly comprising fat globules with a diameter of less than 12 µm), the cut-off threshold is preferably at least 15 µm, more preferably at least 25 µm. Although the upper limit is not particularly critical, it is preferred in practice that the cut-off threshold is less than about 1 mm. The use of such filter/membrane/sieve is advantageous with respect to the ease of controlling the flux and maintaining a desirable particle concentration profile and/or a desirable particle size distribution over the channel.

The flux can be regulated by controlling de flow resistance (Rm) through the membrane/sieve. A desirable flow resistance can be determined according to Darcy's law: Rm = TMP/(J*µ) wherein J is the flux, µ is the dynamic viscosity, TMP the pressure drop over the filter/membrane/sieve. The flux may be regulated in conjunction with the shear rate: the higher the shear rate the higher the flux may be to divide a fraction enriched in particles with a relatively low size from a fraction enriched in relatively large particles.

Optionally, the filter/membrane/sieve has a flow resistance gradient over the filter/membrane/sieve in the direction of the flow; such gradient may be achieved by a porosity gradient and/or thickness gradient in the direction of the flow. In such a filter/membrane/sieve the resistance is usually relatively small at the part near the inlet of the channel and relatively large at the part of the filter/membrane/sieve near the outlet of the channel. This is of use to compensate for flux differences over the length of the membrane in the flow direction, which may occur due to TMP drops, as a consequence of the channel resistance.

For a relatively low TMP drop, and a highly constant flux over the membrane, it is preferred to employ a relatively low ΔP. In an embodiment, in particular an embodiment for fractionating fat globules in milk or for (partially) defatting milk, ΔP over the channel is up to about 10 % of the TMP.

For maintaining a highly constant flux, it is also possible to pressurise the permeate such that the pressure drop on the permeate side is (about) the same as for the pressure drop in the channel.

Besides the use of a filter (membrane or sieve) in a cross-flow set-up, the fractions may be divided otherwise. It is also possible to effectively divide two or more fractions by making use of a flow-splitter. The splitter may simply be a tube or a plurality of parallel tubes positioned essentially concentrically and parallel to the channel inside the channel.

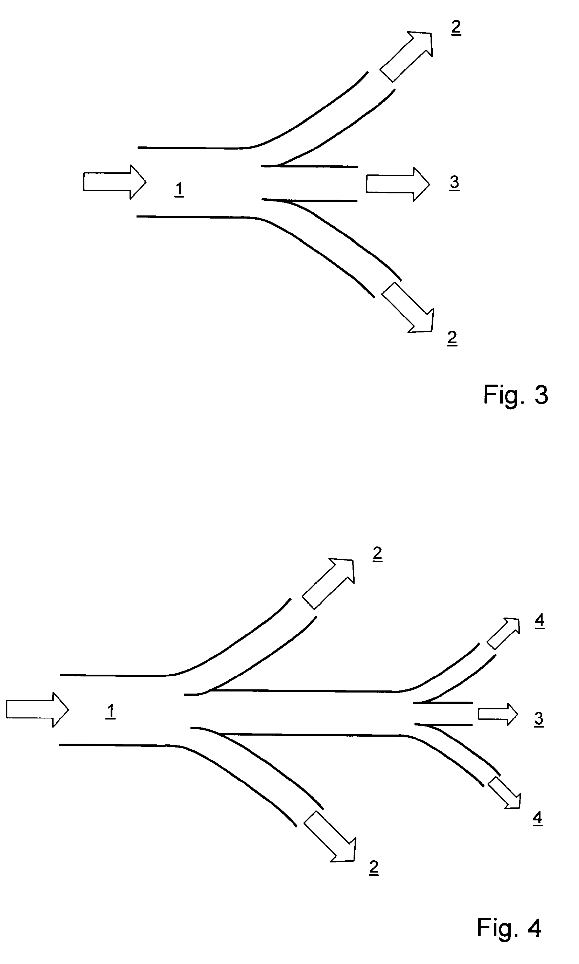

Two possible embodiments of a flow-splitter are shown in Figures 3 and 4. The splitter is generally positioned such that a part of the fluid enriched in particles with a relatively small size (relatively close to the channel wall) flows in a first channel of the splitter and a part of the fluid enriched in relatively large particles flows into a second channel of the splitter.

Accordingly, the invention further relates to a separating apparatus suitable for carrying out a method according to the invention, said apparatus comprising a flow-splitter. In particular the invention relates to a separating apparatus suitable for carrying out a method according to the invention, said apparatus comprising a main channel 1 (for subjecting the fluid to shearing such that particle segregation takes place) that is provided with channel walls defining a flow space for guiding a fluid stream, (the main channel preferably being at least partially substantially invariant in a flow direction), thereby defining a substantially constant flow area in a cross-sectional area of the main channel, wherein the separating apparatus further comprises at least one subchannel (2, 3) in fluid communication with the main channel, the subchannel having an open end (the inlet) arranged in a downstream area of the main channel and directed upstream, and at least the open end of the subchannel having a cross-sectional (flow) area that is smaller than the flow area of the main channel. The apparatus preferably comprises at least two subchannels, each for collecting a different fraction of the fluid.

An apparatus according to the invention further usually comprises a pump in fluid communication with the main channel for passing the fluid through the channel. A reservoir for holding the feed (upstream of the main channel and in fluid communication therewith) and/or one or more reservoirs for holding the divided fractions (downstream of the main channel and the divider (flow splitter, tangential filter), in fluid communication therewith) may also be present

Figure 3 shows an embodiment of a channel for size segregating provided with a flow-splitter of an apparatus according to the invention wherein two different fractions are obtained, when used in accordance with the invention. The main channel through which the liquid is passed under shearing conditions (1, arrow showing flow direction) splits into three fractionation channels. Both channels 2 comprise a fraction enriched in relatively small particles; channel 3 comprises the fraction enriched in relatively large particles.

Preferably, the walls of the main channel and/or the at least one subchannel are tubular formed, so that the channel has a cylindrical shape. The cross-section of the cylindrical tube is preferably essentially circular or essentially rectangular.

In an embodiment, a subchannel diverges in a sub flow direction away from the flow direction.

Preferably, the separating apparatus comprises a separation unit arranged downstream the main channel, the separation unit comprising a number of subchannels in fluid communication with the main channel, separating during use the particles of the fluid stream in fractions depending on the position of the particles in the flow area.

Preferably, a subchannel is downstream provided with a further separation unit (e.g. as shown in Figure 4).

Figure 4 shows an embodiment wherein three different fractions are obtained: channels 2 for the fraction enriched in the smallest particles, channels 4 for the fraction enriched in the middle-sized particles and channel 3 for the fraction enriched in the largest particles. Obviously, more different fractions may be obtained by increasing the number of channels in the splitter. Accordingly, a method wherein use is made of a splitter is very convenient for fractionation into a multiplicity of fractions with different particle size distributions.

Preferably, the separation unit comprises a separation strip forming a wall of a subchannel and having a surface substantially in parallel with the flow direction.

Preferably, the strip has a tubular shape.

Preferably, the separation unit is symmetrical with respect to the symmetrical axis of the main channel.

Preferably, the separation unit comprises a manifold.

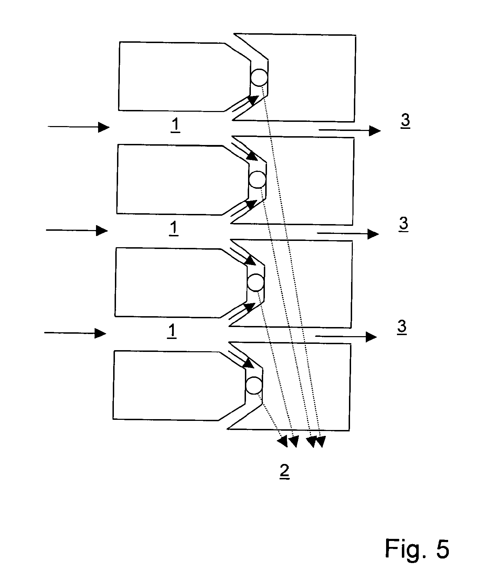

The invention is highly suitable for upscaling to an industrial scale. For instance, it may be employed in a multi-channel apparatus according to the invention, as schematically shown in Figure 5.

A multi-channel apparatus may comprise a number of main channels each with one or more subchannels, wherein subchannels of different main channels are in fluid communication with each other. (e.g. as shown in Figure 5).

Preferably, a number of subchannels of a number of different main channels run into a common exit channel (e.g. as shown in Figure 5; for exit channels 2).

The invention will now be illustrated by the following example.

### Example

Raw milk (fat content 4.40 %) was used in the experiments. The system set-up consisted of the Alfa Laval MFS-1 microfiltration system system, equipped with a 5.0 µm ceramic microfiltration membrane (SCT Membralox P19-40, tubular alpha -Alumina membrane, tube diameter 4.0 mm, membrane area 0.20 m²).

The filtration temperature was 50 °C and the crossflow rate was set at 2.2 or 6.6 m³/h, corresponding to a crossflow velocity (CFV) of 2.6 and 7.7 m/s respectively. The wall shear rate which is given by 8v/dt (v=velocity, dt-=tube diameter), was equal to 5.1*10³ and 15.4*10³ sec⁻¹respectively. The experiments were carried out following the so-called Uniform Transmembrane Pressure concept (Sandblom, SE 7416257 (1974)) by circulating permeate cocurrent to the retentate. The permeate circulation capacity was adjusted to the actual crossflow rate in order to create a permeate pressure drop equal to the retentate pressure drop. The experiments were carried out in a continuous mode at a concentration factor CF(=Q_{feed}/Qᵣₑₜₑₙₜₐₜₑ) of 2.5. TMP was adjusted in such a way that the permeate flux was between 0.069 and 0.56 mm/s which is essentially lower than in patent US 6 551 648B1.

Each experiment was started at a low permeate flux of 0.069 mm/s, allowed to settle for 0.5 h, and followed by a run of 0.5 h at a similar permeate flux. Then the permeate flux was increased stepwise to 0.139, 0.278 and 0.417/0.556 mm/s, in three more runs of 0.5 h each. At the end of each run, samples were taken of the retentate and permeate, and analysed for fat content (Röse Gottlieb method, as described in "American Laboratory, March 1999, page 13-19 by Matheson and Olsen ) and particle size distribution (laser diffraction, Mastersizer X (Malvern Instruments, Malvern, UK)).

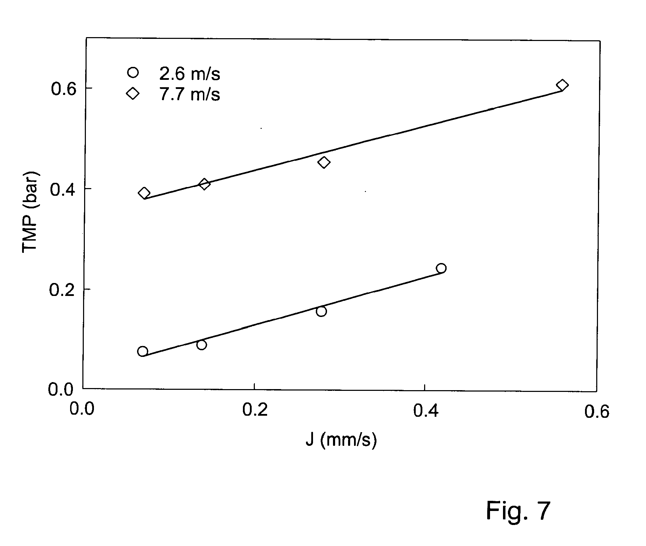

The fractionation of milk fat globules is carried out following a modification of the process described in US 6551648/FR 2776208 but at a lower flux level, in order to maintain a TMP and J in the linear range The measured TMP is shown as a function of J in Figure 7. The TMP increases essentially linear with J. This also indicates that no deposition of fat globules has taken place and that J is controlled by the membrane resistance solely.

The higher absolute values of the TMP at a CFV of 7.7 m/s are due to the presence of an offset pressure in the system.

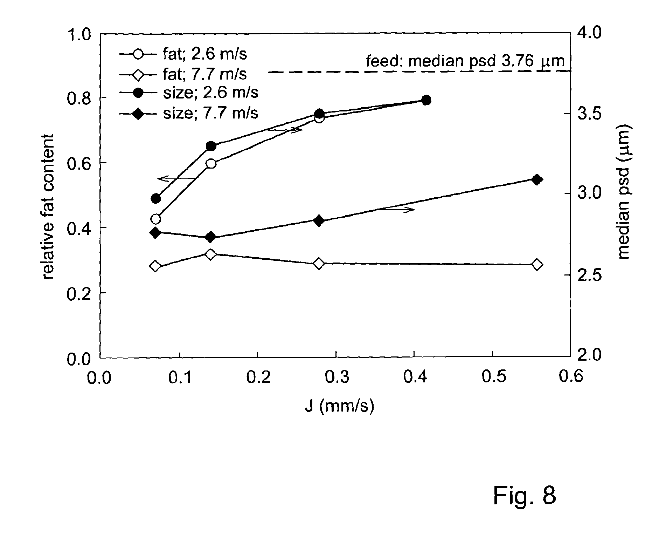

At a CFV of 2.6 m/s, the relative fat content of the permeate increased from 0.43 (J=0.069 mm/s) to 0.79 (J=0.42 mm/s) with increasing J (Figure 8). The mean particle size showed a similar trend and increased from 3.0 to 3.6 µm. At a CFV of 7.7 m/s, the relative fat content was always lower and the particle size was always smaller. The increase with J was less pronounced. The average values were 0.29 (relative fat content) and 2.9 µm (median psd).

The results in Figure 8 indicate that particle size segregation takes place due to the shearing. Particle size segregation increases with increasing shear rate. This results in smaller particle sizes in the region near the wall and consequently in smaller particle sizes in the permeate. As shown in Figure 8, the median indeed decreases with increasing CFV. This indicates that particle size segregation was more severe at a CFV of 7.7 m/s. Moreover, an increase of particle size in the permeate may be achieved with increasing J (no retention by membrane), a trend has been found to be more pronounced at lower shear rates.

## Claims

1. Method for treating a fluid comprising particles, said method comprising subjecting the fluid to shearing, thereby inducing particle size segregation, and dividing the fluid in at least one fraction enriched in particles with a relatively large size and at least one fraction enriched in particles with a relatively small size.

2. Method for treating a fluid comprising particles, optionally according to claim 1, said method comprising subjecting the fluid to shearing, thereby inducing particle size segregation, and dividing the fluid in at least one fraction having an increased concentration of particles compared to the fluid before shearing and at least one fraction having a reduced concentration of particles compared to the fluid before shearing.

3. Method according to claim 1 or 2, wherein
- the shearing comprises passing the fluid through a channel under shearing-conditions;
- the particles are size-segregated in the direction essentially perpendicular to the direction of passing through the channel; and
- the fluid is divided by taking at least one fraction from a part of the size-segregated fluid, the fraction being taken in the direction essentially perpendicular to the fluid's passing direction.

4. Method according to any one of the claims 1-3, wherein the shearing comprises subjecting the fluid to an essentially laminar flow.

5. Method according to any one of the preceding claims, wherein the dividing comprises fractionating the fluid with a flow-splitter.

6. Method according to claim 5, wherein the flow-splitter comprises at least one subchannel in fluid communication with a main channel (in which main channel the fluid is subjected to shearing), the subchannel having an open end arranged in a downstream area of the main channel and directed upstream, and having a cross-sectional area that is smaller than the flow area of the main channel.

7. Method according to any one of the preceding claims, wherein the fluid is divided into at least two fractions in a tangential filtration device, using a membrane or sieve.

8. Method according to claim 7, wherein the transfilter pressure drop (TMP) and the flux (J) through the filter are chosen at values at which TMP versus J shows essentially linear behaviour.

9. Method according to claim 8, wherein the cut-off threshold of the membranes respectively the sieve is larger than the diameters of both the relatively small particles and the relatively large particles.

10. Method according to claim 9, wherein the cut-off threshold of the membrane/sieve is at least 2 times, preferably at least 5 times, the number average particle diameter of the particles in the fraction with the relatively large particles.

11. Method according to according to any one of the claims 7-10, wherein cut-off threshold of the membrane or sieve is at least 15 µm, preferably in the range of 25-1000 µm.

12. Method according to any one of the preceding claims, wherein the particles to be separated are selected from the groups consisting of fat globules, emulsion droplets, (coated) gas bubbles, polymer particles (in particular protein particles, starch particles), micro-organisms, micelles (in particular micelles comprising a casein) and crystals (e.g. lactose crystals).

13. Method according to any one of the preceding claims, wherein the fluid is selected from the group consisting of fluids containing milk proteins and milk fat (e.g. milk), suspensions comprising protein and/or starch, and fermentation fluids.

14. Method according to any one of the preceding claims, wherein the fluid is milk and the particles are fat globules.

15. Fluid fraction comprising particles, obtainable by a method according to any one of the preceding claims.

16. Apparatus suitable for carrying out a method according to any one of the claims 1-14, said apparatus comprising a main channel (1) that is provided with channel walls defining a flow space for guiding a fluid stream, the main channel (1) being at least partially substantially invariant in a flow direction, thereby defining a substantially constant flow area in a cross-sectional area of the main channel (1), wherein the separating apparatus further comprises at least one subchannel (2,3) in fluid communication with the main channel (1), the subchannel (2,3) having an open end arranged in a downstream area of the main channel (1) and directed upstream, and having a cross-sectional area that is smaller than the flow area of the main channel (1).

17. Apparatus suitable for carrying out a method according to any one of the claims 1-14, said apparatus comprising a tangential filtration membrane, said membrane being equipped with laminar spacers.
